# FASCICULE DE BREVET EUROPEEN

(11) **EP 1 354 773 B1**
(45) Date de publication et mention de la délivrance du brevet: **29.06.2005**
(21) Numéro de dépôt: 03290935.0
(22) Date de dépôt: 15.04.2003
(51) Int. Cl.: B60R 21/20

(54) **Procédé de fabrication d'une partie de planche de bord équipée d'un coussin gonflable**
Verfahren zur Herstellung eines Instrumententafelteils ausgerüstet mit einem Airbag
Method of manufacturing part of a dashboard equipped with an airbag

(30) Priorité: 18.04.2002 FR 0204901
(43) Date de publication de la demande: 22.10.2003
(73) Titulaire: Faurecia Interieur Industrie, 92735 Nanterre (FR)
(72) Inventeur: Ponthieu, Didier, 60114 Meru (FR)
(74) Mandataire: Arnaud, Jean

(56) Documents cités:
- EP-A- 0 967 066
- FR-A- 2 799 700
- US-B1- 6 318 752
- US-B1- 6 337 461
- PATENT ABSTRACTS OF JAPAN vol. 2000, no. 22, 9 mars 2001 (2001-03-09) & JP 2001 122071 A (CALSONIC KANSEI CORP), 8 mai 2001 (2001-05-08)

## Description

L'invention concerne une planche de bord pour véhicule automobile.

Plus particulièrement, l'objet est la fabrication d'une planche de bord présentant un côté extérieur, un côté intérieur et une paroi incluant un couvercle pour un système de protection à coussin(s) gonflable(s) disposé(s) derrière la planche de bord, le couvercle qui est invisible depuis l'extérieur étant délimité en bordure par un affaiblissement de la paroi de la planche de bord, cet affaiblissement étant visible intérieurement et définissant une ouverture pour le(s) coussin(s) gonflable(s). Dans ce procédé:
(a) on injecte une couche de matière plastique dure,
(b) on réalise localement, du côté intérieur, un affaiblissement de cette couche de matière plastique, avantageusement par découpe après moulage,
(c) on recouvre du côté extérieur la couche de matière plastique dure avec un revêtement décoratif,
(d) on prévoit une patte pourvue d'une charnière pour l'articulation du couvercle par rapport à un cadre de renfort en matière plastique dure, adapté pour être fixé à la planche de bord du côté intérieur et définissant un canal d'éjection pour le(s) coussin(s) gonflable(s), la patte étant naturellement sensible aux vibrations générées par un appareil de soudage de matière(s) plastique(s) par vibrations et étant donc naturellement susceptible de transmettre ces vibrations, ladite patte étant adaptée pour être fixée à ladite couche de matière plastique dure à l'endroit du couvercle et au cadre de renfort en des zones situées du côté intérieur de la planche de bord.

Le problème qui se pose concerne les inconvénients qui peuvent résulter du soudage par vibrations du cadre de renfort sur la planche de bord.

En effet, cette fixation s'opérant à proximité immédiate de l'affaiblissement, la planche de bord risque d'être endommagée du fait des vibrations.

En particulier, l'affaiblissement de la paroi risque de devenir visible du côté extérieur de la planche de bord, malgré le revêtement décoratif.

Plus généralement, on peut considérer que l'étape de soudure par vibrations du cadre de renfort à la couche de plastique dur de la planche de bord est critique vis-à-vis de l'intégrité, de la solidité et de l'aspect de la planche de bord à l'endroit, ou dans l'environnement immédiat, de son couvercle prévu pour être invisible extérieurement.

Pour apporter une solution à ce problème, une caractéristique de l'invention prévoit que :
(e) on fixe la patte au couvercle,
(f) pour fixer le cadre de renfort à la planche de bord, on le soude par vibration à ladite couche de matière plastique dure, à proximité immédiate de l'affaiblissement et, avant ce soudage, une discontinuité vibratoire existe entre le cadre de renfort et la patte pour que, lors du soudage du cadre de renfort, certaines des vibrations générées par ce soudage soient absorbées à l'écart de l'affaiblissement délimitant le couvercle,
(g) et, juste avant l'étape (f), ou après cette étape, on fixe la patte au cadre de renfort.

Pour une ergonomie de fabrication liée en particulier à la standardisation de cette fabrication, à une fabrication en série et à une diminution de ces coûts de fabrication, on conseille que l'étape (e) de la fixation de la patte au couvercle s'opère entre les étapes (d) et (f), et avant l'étape (g). Les étapes (b) et (c) peuvent être interverties.

Pour limiter encore les contraintes imposées à la zone d'affaiblissement lors de la fabrication, on conseille que l'étape (e) comprenne un bouterollage à air chaud.

Dans ce cas, il est a priori prévu que la couche de matière plastique dure constituant notamment la partie intérieure du couvercle soit en une matière thermoplastique (typiquement polypropylène EPDM) et que la patte soit métallique avec des passages ménagés à travers elle en vue de ce bouterollage.

Subsidiairement, il est d'ailleurs conseillé, pour une solidité d'assemblage et une tenue de la planche de bord lors de la sortie du coussin gonflable, de réaliser par emboutissage une patte monobloc en tôle métallique intégrant la zone de fixation au cadre, la charnière et la zone de fixation à la couche de matière plastique dur.

Avantageusement, ladite patte se présente comme un plaque coudée à l'endroit de la charnière.

Pour assurer de manière la plus appropriée possible la "discontinuité vibratoire" établie lors de l'étape (f) entre le cadre de renfort et la patte, comme indiqué ci-avant, deux modes de réalisation sont plus particulièrement envisagés.

Selon une première réalisation :
-- lors de l'étape (d), on fournit une patte présentant, entre la charnière et la zone de fixation de la patte au cadre, une zone d'amortissement des vibrations, et
-- entre les étapes (e) et (f), on fixe la patte au cadre de renfort.

Avantageusement, la zone d'amortissement des vibrations sera au demeurant intégrée à la patte, laquelle présentera alors un brin mort à l'endroit de cette zone.

Selon un second mode de réalisation :
-- lors de l'étape (f), on prévoit d'absorber les vibrations dans l'air, en retardant jusqu'après cette étape la fixation de la patte au cadre de renfort,
-- et ce n'est donc que lors de l'étape postérieure (g) que l'on fixe ladite patte au cadre de renfort.

On notera encore qu'aujourd'hui, un certain nombre de planches de bord de véhicule se doivent de présenter, en tant que revêtement décoratif extérieur, une peau d'aspect doublée intérieurement par une couche de mousse.

Une caractéristique de l'invention prévoit donc, lors de l'étape (c), de recouvrir la couche de plastique dur par un revêtement comprenant une couche de mousse doublée par une fine peau (ou un film) d'aspect.

Une telle solution offre un aspect extérieur agréable, avec un toucher "souple". Par contre, un tel revêtement avec une couche de mousse accroît les risques de rendre visible la zone d'affaiblissement mécanique du couvercle, ce qui impose d'autant plus l'apport d'une solution à ce problème déjà induit par le soudage par vibrations du cadre de renfort.

A cet égard, ce problème d'un défaut visible sur l'extérieur de la planche de bord est en particulier critique lorsque la peau d'aspect est une peau plastique et que sa mise en place avec la couche intermédiaire de mousse par dessus la couche de plastique dur est réalisée à chaud par thermogainage.

Une description encore plus détaillée de l'invention va maintenant être fournie en référence aux dessins annexés dans lesquels :
la figure 1 est une vue schématique en coupe d'un premier mode de réalisation de l'invention,
la figure 2 est une vue agrandie du détail II des figures 1 et 3,
la figure 3 est une alternative de réalisation selon la même vue en coupe que celle de la figure 1,
et la figure 4 montre une réalisation de la patte à l'endroit de laquelle s'articule le couvercle, dans le cas où il s'agit d'une plaque métallique intégrant un "brin mort" d'amortissement vibratoire (vue à plus petite échelle que sur la figure 3).

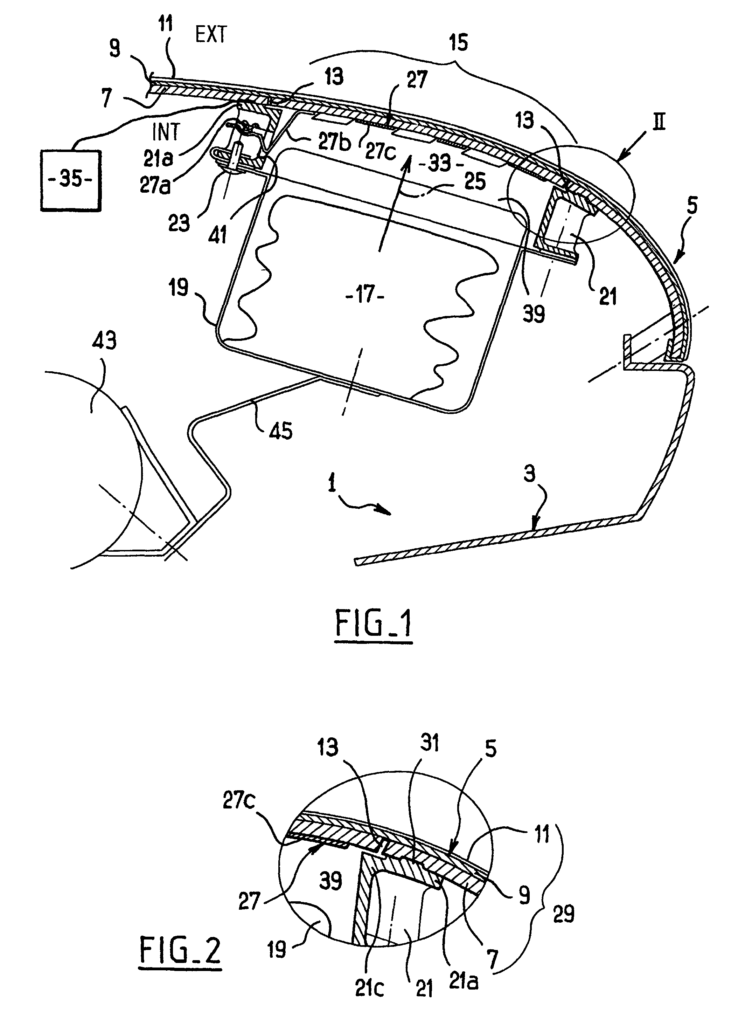

On précisera dès à présent que sur les figures 1, 2 et 3, les épaisseurs des couches de constitution de la paroi de la partie de planche de bord illustrée ne sont pas proportionnelles entre elles. Typiquement, l'épaisseur de ces couches va décroissante de l'intérieur vers l'extérieur.

Sur la figure 1 tout d'abord, on voit donc une section locale d'une planche de bord 1 (ou panneau d'instrumentation) d'un véhicule automobile.

Typiquement, la planche de bord est (au moins essentiellement) réalisée en matière thermoplastique.

Cette planche de bord comprend, en partie inférieure, un corps de planche de bord 3 et, en partie supérieure, une coiffe de planche de bord 5.

C'est la coiffe 5 à laquelle on s'intéresse ici.

La coiffe 5 comprend trois couches, de l'intérieur (INT) vers l'extérieur (EXT) : une première couche assez épaisse en matière plastique dure 7 (par exemple en polypropylène EPDM), revêtue d'une seconde couche de mousse expansée 9, elle-même revêtue d'une fine couche extérieure décorative 11.

La couche extérieure 11 est typiquement en matière plastique souple que l'on appelle alors "peau".

Dans la première couche 7, typiquement dénommée "insert" est localement ménagé un affaiblissement 13.

Cet affaiblissement consiste en une fente découpée de préférence sur toute l'épaisseur de la couche 7, depuis l'intérieur. La découpe forme un contour qui se referme entièrement, ou partiellement, sur lui-même.

Dans la réalisation de la figure 1, il s'agit d'un contour à quatre côtés sensiblement rectangulaire.

On définit ainsi, dans la limite intérieure de cet affaiblissement mécanique, un couvercle 15 pour un système de protection du (des) occupant(s) avant du véhicule par coussin(s) gonflable(s).

En 17, est ainsi représenté un tel coussin gonflable, dans son état dégonflé.

Le coussin 17 est disposé à l'intérieur d'un boîtier 19 fixé à un cadre de renfort 21 par des moyens de fixation, telles que des vis, dont une a été représentée en 23.

Le coussin gonflable 17 et son boîtier 19 sont disposés à l'intérieur de la planche de bord, de même que le cadre de renfort 21 qui peut se présenter comme un cadre à quatre côtés, avec une section en "U", comme illustré sur la figure 1.

Sur l'illustration, les fixations du boîtier 19 au cadre 21 sont réalisés à l'endroit d'une des ailes du "U", l'autre aile 21a servant à la fixation du cadre 21 à la coiffe 5, et plus particulièrement à la couche intérieure plastique 7.

Autant la fente (continue ou discontinue) constituant l'affaiblissement 13 est visible depuis l'intérieur de la planche de bord (hors la présence du cadre de renfort 21), autant cet affaiblissement doit être invisible du côté extérieur de la coiffe, dès lors qu'il ne traverse pas la couche extérieure décorative 11, ni au moins la partie la plus extérieure de la couche intermédiaire de mousse plastique 9.

Comme on l'a compris, la ligne d'affaiblissement 13 définit une ouverture pour le coussin gonflable 19 lorsque, sous la pression d'un propulseur (non représenté), ce coussin est propulsé hors de son boîtier, dans le sens de la flèche 25, rompant ainsi la ligne d'affaiblissement 13 sur l'essentiel au moins de sa longueur, et sortant de la coiffe 5 en direction de l'occupant du véhicule situé en regard de cette zone de la planche de bord.

Pour une sortie contrôlée du coussin gonflable et pour retenir le couvercle (également appelé portillon) 15, ce couvercle est articulé vis-à-vis du cadre de renfort 21.

Cette fonction d'articulation, ainsi qu'une fonction complémentaire de renfort du couvercle 15, est assurée par une patte 27 fixée en 27a au cadre 21 et présentant en 27b une charnière d'articulation.

Cette patte 27 est constituée d'une tôle métallique emboutie. Elle s'étend donc à l'intérieur de la planche de bord, sous la coiffe 5, et présente en outre une partie 27c qui double intérieurement la partie de la couche 7 qui constitue la couche intérieure du couvercle 15.

De préférence, la partie 27c de la patte 27 s'étend sur l'essentiel au moins de la surface intérieure du couvercle 15, sensiblement jusqu'en bordure extérieure de celui-ci, comme on peut le voir sur la figure 2 où l'on détaille mieux la fente 13.

On considère que l'ensemble des couches 7, 9, 11 constitue, pour la planche de bord et plus précisément ici pour la coiffe 5, une paroi globalement repérée 29 sur la figure 2.

Comme cela apparaît toujours plus clairement sur la figure 2, l'aile 21a du cadre de renfort 21 est fixée, par un soudage par vibrations, en 31, à la couche plastique dure intérieure 7.

On notera que le cadre 21 a pour objet non seulement de renforcer la structure de la planche de bord, compte tenu de la présence du coussin gonflable, mais sert également de canal d'éjection pour ce coussin gonflable pour l'orienter suivant la direction 25 jusqu'à l'ouverture 33 que crée le basculement du couvercle 15 autour de la charnière 27b, lors de l'explosion du sac.

Comme déjà indiqué, un problème important résolu dans l'invention concerne l'endommagement que peut subir la coiffe 5 au moins localement lors du soudage par vibrations du cadre de renfort 21 sur la couche 7.

Pour apporter une solution à ce problème, l'invention propose de réaliser comme suit l'assemblage précité illustré sur la figure 1.

Tout d'abord, on injecte sous pression, dans un moule d'injection, la couche de matière plastique dure 7. Puis, on découpe localement, du côté intérieur, au moins cette couche pour constituer la ligne d'affaiblissement mécanique 13. Pour cela, on peut recourir à une découpe par laser.

On recouvre ensuite du côté extérieur cette couche 7 ainsi découpée localement, par les couches superficielles 9 et 11, de telle manière que la fente 13 n'apparaisse donc pas à l'oeil du côté extérieur de la coiffe 5, la couche extérieure 11 pouvant en particulier être constituée par une fine couche plastique, grainée ou non.

Pour effectuer cette étape de recouvrement de la couche 7, il s'avère techniquement approprié dans certains cas de recourir à un thermogainage consistant à doubler la couche 7 par une couche de mousse plastique expansée 9 elle-même revêtue d'une peau décorative extérieure 11. En pratique, ceci participe au risque de rendre visible la ligne d'affaiblissement mécanique 13.

Dans l'hypothèse où la patte 27 aurait consisté en un filet ou en une plaque en matière thermoplastique, comme dans US-A-6 318 752, comme divulgant l'art antérieure le plus proche, ce risque risque aurait malgré tout typiquement été considéré comme acceptable, étant donné que la fixation du cadre 21 à la paroi 29 ainsi réalisée n'aurait pas aggravé le risque de déceler la fente 13 depuis l'extérieur de la planche de bord, étant donné qu'alors, il n'y aurait pas eu de problèmes de vibrations susceptibles d'être transmises par ce filet ou cette plaque dans l'environnement de l'affaiblissement 13.

Mais, dans le cadre de l'invention, il est prévu d'utiliser en tant que patte 29, une patte naturellement sensible aux vibrations générées lors du soudage et propre donc à entraîner un endommagement à l'endroit, ou dans l'environnement, de la ligne d'affaiblissement 13.

En particulier, la patte 27 peut consister en une plaque métallique mise en forme avec un ou plusieurs coudes, comme le montre la section de la figure 1, l'épaisseur de cette plaque rapportée à ses autres dimensions étant telle qu'elle transmet nettement les vibrations générées par l'appareil de soudage par vibrations schématisé en 35 sur la figure 1.

La solution de l'invention à ce problème, telle que déjà indiquée, est d'assurer une discontinuité vibratoire entre le cadre 21 et la patte 27.

Pour cela, on prévoit en première solution de fixer la partie 27c de la patte 27 "naturellement vibrante" à la couche 7, à l'endroit du couvercle 15, mais par contre de ne pas fixer sa partie opposée 27a, de sorte qu'au moment de la soudure par vibrations du cadre 21, aucune vibration ne se transmet à la patte 27, l'air jouant le rôle d'absorbant.

Et ce n'est qu'ensuite, une fois le soudage effectué, que l'on fixe la partie 27a au cadre 21.

A noter qu'une autre solution peut être de fixer la patte en 27a au cadre 21, sans fixer la zone 27c, celle-ci n'étant liée à la coiffe 5 qu'après l'étape de soudage par vibrations du cadre 21. Mais cette solution est industriellement moins pratique et n'est pas ici conseillée.

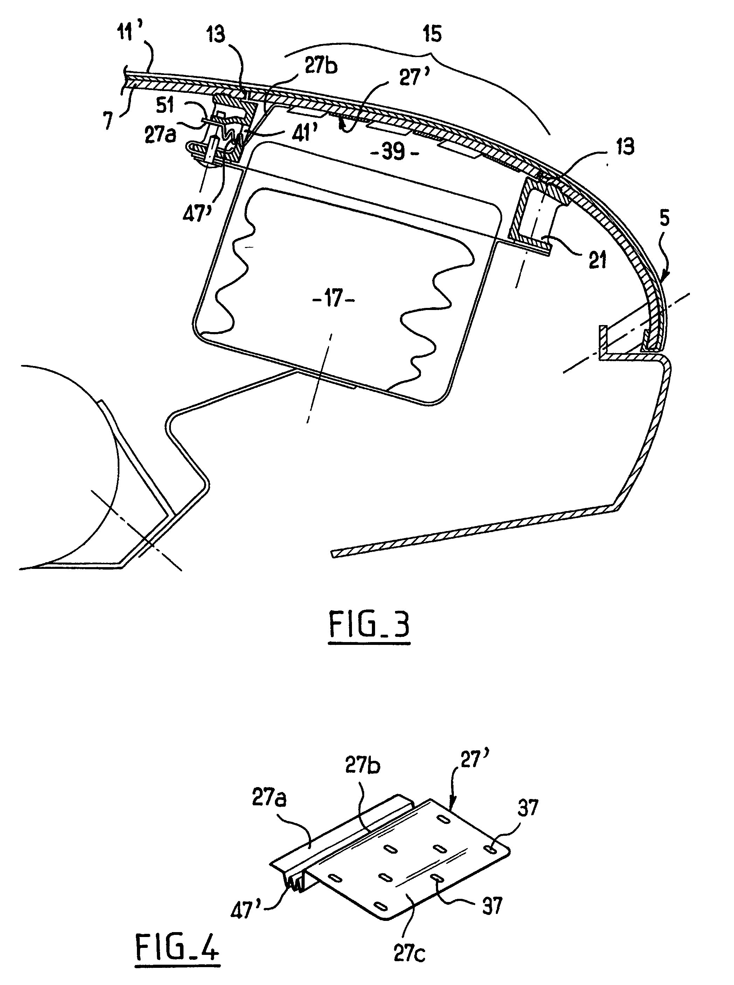

Concernant la liaison entre la patte 27 et la couche 7, on la réalisera de préférence par bouterollage à air chaud, si la partie 27c présente, comme dans l'illustration de la figure 4, des passages 27 permettant à la matière plastique en fusion de fluer à travers la surface en regard de cette patte, en assurant ainsi une fixation efficace. Ceci limite les risques de rendre l'affaiblissement 27 visible.

On notera également que la fixation de la patte 27 au cadre 21 s'effectuera à l'extérieur du canal d'éjection 39 délimité par le cadre 21 et qui communique avec l'ouverture 33.

Cette fixation extérieure pourra être réalisée sur une nervure du cadre de renfort, et la patte pourra passer, à la base de sa charnière 27b, à travers une ouverture 41 ménagée dans l'âme du cadre 21, sur un de ses côtés.

Sur la figure 2, on remarquera également que le cadre 21 sera avantageusement disposé de manière, une fois fixé, à déborder légèrement à l'intérieur des limites du couvercle 15 de sorte qu'alors, les fentes d'affaiblissement mécanique 13 soient protégées par un angle du cadre (voir en 21c sur la figure 2).

Parvenus à cette étape de fabrication, le boîtier 19 renfermant le sac dégonflé 17 et son système de propulsion sont fixés notamment en 23 au cadre 21.

Une fixation complémentaire à la traverse (appelée également poutre transversale ou "cross-beam") fixée au bâti du véhicule et qui renforce ensemble de la planche de bord 1, peut être prévue par l'intermédiaire d'une plaque 45 reliant la traverse 43 et le boîtier 19.

La différence entre la solution de la figure 3 et celle de la figure 1 consiste en la manière de constituer la discontinuité vibratoire entre le cadre de renfort et la patte, pour éviter donc en particulier de rendre visible le couvercle 15.

Dans ce cas, on a choisi de réaliser une zone d'amortissement des vibrations entre la charnière de la patte de renfort et la zone de fixation de cette patte au cadre 21.

Sur la figure 3, les pièces identiques entre le mode de réalisation illustré sur cette figure et celui illustré sur la figure 1 ont les mêmes repères.

Ainsi, si la patte de renfort et d'articulation est maintenant repérée dans son ensemble 27', elle comprend malgré tout toujours une partie 27c en forme de plaque, comme le montre la figure 4, pour doubler intérieurement le couvercle 15 qui s'articule à l'endroit de la charnière 27b que forme l'un des coudes de cette patte 27', laquelle présente la particularité d'intégrer un brin mort 47' situé de préférence entre la zone de charnière 27b et la zone 27a de fixation au cadre 21.

Dans ce cas, la patte 27' peut être fixée au couvercle et au cadre avant de souder le cadre à la planche de bord.

Le brin mort 47' peut consister en particulier en une zone de circonvolutions ou de zigzags formant une sorte de surlongeur favorable à casser les ondes vibratoires transmises par l'appareil de soudage 35 au moment de la fixation du cadre à la couche 7.

Avantageusement, ce brin mort 47' sera situé à l'extérieur du canal d'éjection 39, c'est-à-dire au-delà du passage 41' à travers lequel passe la patte 27' pour être fixée à la nervure 51 du cadre.

On évite ainsi d'empiéter sur le passage réservé à la sortie du coussin gonflable 17 et d'interférer avec la zone 27b d'articulation.

Concernant la coiffe 5, celle-ci comprend toujours, outre l'insert rigide 7 en matière plastique, une couche extérieure fine décorative qui pourrait être un tissu, tel que repéré 11' sur la figure 3, même si la solution du thermogainage est préférée pour des questions de procédé de fabrication, de sécurité d'ouverture du couvercle compte tenu des réalisations ici envisagées, et de sécurité quant à l'invisibilité de la présence d'un couvercle pour coussin gonflable, derrière cette couche décorative.

## Revendications

1. Procédé de fabrication d'une partie de planche de bord présentant un côté extérieur, un côté intérieur et une paroi (29) incluant un couvercle (15) pour un système de protection (17) à coussin(s) gonflable(s) disposé(s) derrière la planche de bord, vue depuis l'extérieur, le couvercle qui est invisible depuis l'extérieur, étant délimité en bordure par un affaiblissement (13) de la paroi de la planche de bord, cet affaiblissement étant visible du côté intérieur et définissant une ouverture pour le(s) coussin(s) gonflable(s), le procédé étant characterisé par les étapes suivantes :
(a) on injecte une couche de matière plastique dure (7),
(b) on réalise localement, du côté intérieur, un affaiblissement (13) dans la couche de matière plastique dure,
(c) on recouvre du côté extérieur la couche de matière plastique dure avec un revêtement décoratif (11),
(d) on prévoit une patte (27, 27') pourvue d'une charnière (27b) pour l'articulation du couvercle par rapport à un cadre de renfort (21) en matière plastique dure, adapté pour être fixé à la planche de bord du côté intérieur et définissant un canal d'éjection (39) pour le(s) coussin(s) gonflable(s), la patte étant naturellement sensible aux vibrations générées par un appareil (35) de soudage de matière(s) plastique(s) par vibrations et étant donc naturellement susceptible de transmettre ces vibrations, ladite patte étant adaptée pour être fixée à ladite couche de matière plastique dure (7) et au cadre de renfort, à l'endroit du couvercle, en des zones situées du côté intérieur de la planche de bord,
(e) on fixe la patte (27) au couvercle (15),
(f) pour fixer le cadre de renfort (21) à la planche de bord (5), on le soude par vibrations à la couche de matière plastique dure (7), à proximité immédiate de l'affaiblissement (13) et, avant ce soudage, une discontinuité vibratoire existe entre le cadre de renfort et la patte pour que, lors du soudage du cadre de renfort, certaines des vibrations générées par ce soudage soient absorbées à l'écart de l'affaiblissement délimitant le couvercle,
(g) et, juste avant l'étape (f), ou après cette étape, on fixe la patte (27, 27') au cadre de renfort (21).

2. Procédé selon la revendication 1, **caractérisé en ce que** l'étape (e) s'opère entre les étapes (d) et (f) et avant l'étape (g).

3. Procédé selon la revendication 1 ou la revendication 2, **caractérisé en ce que** l'étape (e) de fixation de la patte (27, 27') au couvercle (15) comprend un bouterollage à air chaud.

4. Procédé selon l'une quelconque des revendications précédentes, **caractérisé en ce que**, lors de l'étape (d), on réalise par emboutissage une patte (27, 27') monobloc en tôle métallique intégrant la zone (27a) de fixation au cadre, la charnière (27b) et la zone (27c) de fixation à la couche de matière plastique dur.

5. Procédé selon les revendications 3 et 4, **caractérisé en ce que** la patte se présente comme une plaque coudée à l'endroit de la charnière (27b) et traversée par des passages (37) en regard du couvercle (15).

6. Procédé selon l'une quelconque des revendications précédentes, **caractérisé en ce que** :
-- lors de l'étape (d), on fournit une patte (27) présentant, entre la charnière (27b) et la zone (27a) de fixation de la patte au cadre, une zone (47') d'amortissement des vibrations, et
-- entre les étapes (e) et (f), on fixe la patte au cadre de renfort (21).

7. Procédé selon la revendication 6, **caractérisé en ce que** la zone d'amortissement des vibrations est intégrée à la patte (27'), laquelle présente un brin mort (47') à l'endroit de cette zone.

8. Procédé selon l'une quelconque des revendications 1 à 5, **caractérisé en ce que** :
-- lors de l'étape (f), on absorbe lesdites vibrations dans l'air, en retardant jusqu'après cette étape la fixation de la patte (27) au cadre de renfort (21),
-- et lors de l'étape (g) postérieure à l'étape (f), on fixe donc ladite patte (27) au cadre de renfort.

9. Procédé selon l'une quelconque des revendications précédentes, **caractérisé en ce que** lors de l'étape (c), on recouvre la couche de matière dure (7) avec un revêtement comprenant une couche de mousse (9) doublée par une peau d'aspect (11).

10. Procédé selon la revendication 9, **caractérisé en ce que** lors de l'étape (c), on effectue un thermogainage de la couche de matière dure, la peau d'aspect consistant en une couche de matière plastique.

11. Procédé selon la revendication 7, **caractérisé en ce que** le brin mort (47') de la patte est situé à l'extérieur du canal d'éjection (39) réservé pour le(s) coussin(s) gonflable(s).

## Patentansprüche

1. Verfahren zur Herstellung eines Instrumententafelteils mit einer Außenseite, einer Innenseite und einer Wand (29), welche einen Deckel (15) für ein Schutzsystem (17) mit aufblasbarem (n) Kissen enthält, das (die) hinter der Instrumententafel von außen gesehen angeordnet ist (sind), wobei der Deckel, der von außen nicht sichtbar ist, an der Umrandung durch eine Schwächung (13) der Wand der Instrumententafel begrenzt ist, diese Schwächung auf der Innenseite sichtbar ist und eine Öffnung für das (die) aufblasbare(n) Kissen bestimmt, wobei das Verfahren durch folgende Schritte **gekennzeichnet** ist:
a) man spritzt eine Schicht aus hartem Kunststoff (7) ein,
b) man realisiert lokal auf der Innenseite eine Schwächung (13) in der Schicht aus hartem Kunststoff,
c) man bedeckt auf der Außenseite die Schicht aus hartem Kunststoff mit einer Dekorationsverkleidung (11),
d) man sieht eine Halterung (27, 27') vor, die mit einem Scharnier (27b) zum Anlenken des Deckels bezüglich eines Verstärkungsrahmens (21) aus hartem Kunststoff versehen ist, der geeignet ist, an der Instrumententafel auf der Innenseite befestigt zu werden, und einen Einspritzkanal (39) für das (die) aufblasbare(n) Kissen bestimmt, wobei die Halterung selbstverständlich gegen Vibrationen empfindlich ist, die durch einen Schweißapparat (35) aus Kunststoff(en) durch Vibrationen erzeugt werden, und also selbstverständlich geeignet ist, diese Vibrationen zu übertragen, wobei die Halterung geeignet ist, an der Schicht aus hartem Kunststoffmaterial (7) und an dem Verstärkungsrahmen an der Stelle des Deckels an Bereichen befestigt zu werden, die an der Innenseite der Instrumententafel liegen,
e) man befestigt die Halterung (27) an dem Deckel (15),
f) um den Verstärkungsrahmen (21) an der Instrumententafel (5) zu befestigen, schweißt man ihn durch Vibrationen an die Schicht aus hartem Kunststoff (7) in unmittelbarer Nähe der Schwächung (13), und vor dem Schweißen besteht eine Vibrationsunterbrechung zwischen dem Verstärkungsrahmen und der Halterung, damit während des Schweißens des Verstärkungsrahmens bestimmte, durch diese Schweißung erzeugte Vibrationen von der Schwächung absorbiert werden, welche den Deckel begrenzt,
g) und unmittelbar vor dem Schritt f) oder nach diesem Schritt befestigt man die Halterung (27, 27') an dem Befestigungsrahmen (21).

2. Verfahren nach Anspruch 1, **dadurch gekennzeichnet, daß** sich der Schritt e) zwischen den Schritten d) und f) und vor dem Schritt g) vollzieht.

3. Verfahren nach Anspruch 1 oder nach Anspruch 2, **dadurch gekennzeichnet, daß** der Schritt e) zur Befestigung der Halterung (27, 27') an dem Deckel (15) ein Nieten mit warmer Luft aufweist.

4. Verfahren nach einem der vorhergehenden Ansprüche, **dadurch gekennzeichnet, daß** man während des Schrittes d) durch Ziehen eine einstückige Halterung (27, 27') aus Metallblech realisiert, welche den Befestigungsbereich (27a) an dem Rahmen, das Scharnier (27b) und den Befestigungsbereich (27c) an der Schicht aus hartem Kunststoff integriert.

5. Verfahren nach den Ansprüchen 3 und 4, **dadurch gekennzeichnet, daß** sich die Halterung als eine Platte darstellt, die an der Stelle des Scharniers (27b) gekrümmt ist und von den Durchgängen (37) gegenüber dem Deckel (15) durchquert wird.

6. Verfahren nach einem der vorhergehenden Ansprüche, **dadurch gekennzeichnet, daß**:
- man während des Schrittes d) eine Halterung (27) liefert, welche zwischen dem Scharnier (27b) und dem Befestigungsbereich (27a) der Halterung an dem Rahmen einen Vibrationsdämpfungsbereich (47') aufweist, und
- man zwischen den Schritten e) und f) die Halterung an dem Verstärkungsrahmen (21) befestigt.

7. Verfahren nach Anspruch 6, **dadurch gekennzeichnet, daß** der Vibrationsdämpfungsbereich an der Halterung (27') integriert wird, welche ein totes Stück (47') an der Stelle dieses Bereiches aufweist.

8. Verfahren nach einem der Ansprüche 1 bis 5, **dadurch gekennzeichnet, daß**:
- man während des Schrittes f) die Vibrationen in der Luft absorbiert, indem man die Befestigung der Halterung (27) an dem Verstärkungsrahmen (21) bis nach diesem Schritt verzögert,
- und man während des Schrittes g) nach dem Schritt f) also die Halterung (27) an dem Befestigungsrahmen befestigt.

9. Verfahren nach einem der vorhergehenden Ansprüche, **dadurch gekennzeichnet, daß** man während des Schrittes c) die Schicht aus hartem Material (7) mit einer Verkleidung bedeckt, die eine Schaumschicht (9) aufweist, die mit einer Haut für das Aussehen (11) doubliert ist.

10. Verfahren nach Anspruch 9, **dadurch gekennzeichnet, daß** man während des Schrittes c) ein Thermoeinhüllen der Schicht aus hartem Material durchführt, wobei die Haut für das Ansehen aus einer Schicht aus Kunststoff besteht.

11. Verfahren nach Anspruch 7, **dadurch gekennzeichnet, daß** das tote Stück (47') der Halterung außerhalb des Ejektionskanals (39) liegt, der für das (die) aufbtasbare(n) Kissen reserviert ist.

## Claims

1. A method of manufacturing a portion of a dashboard presenting an outside, an inside, and a wall (29) including a cover (15) for an air bag protection system (17) placed behind the dashboard, as seen from the outside, the cover being invisible from the outside and being defined at its margin by a line of weakness (13) in the wall of the dashboard, said line of weakness being visible from the inside and defining an opening for the air bag(s), the method being **characterized by** the following steps:
a) injection molding a layer of hard plastics material (7);
b) locally making a line of weakness (13) in the layer of hard plastics material, from the inside;
c) covering the layer of hard plastics material on the outside with a decorative covering (11);
d) providing a tab (27, 27') having a hinge (27b) for hinging the cover relative to a reinforcing frame (21) of hard plastics material adapted to be fastened to the inside of the dashboard and defining an ejection channel (39) for the air bag, the tab being naturally sensitive to vibration generated by a device (35) for welding plastics material by vibration and thus being naturally liable to transmit said vibration, said tab being adapted to be fastened to said layer of hard plastics material (7) and to the reinforcing frame in the vicinity of the cover in areas that are situated on the inside of the dashboard;
e) fastening the tab (27) to the cover (15);
f) in order to fasten the reinforcing frame (21) to the dashboard (5), vibration welding it to the layer of hard plastics material (7) in the immediate vicinity of the line of weakness (13), and prior to performing said welding, ensuring that a vibratory discontinuity exists between the reinforcing frame and the tab so that while the reinforcing frame is being welded, at least some of the vibration generated by the welding is absorbed away from the line of weakness defining the cover; and
g) immediately before step f) or after said step, fastening the tab (27, 27') to the reinforcing frame (21).

2. A method according to claim 1, **characterized in that** step e) takes place between steps d) and f) and before step g).

3. A method according to claim 1 or claim 2, **characterized in that** step e) of fastening the tab (27, 27') to the cover (15) comprises hot air riveting.

4. A method according to any preceding claim, **characterized in that** during step d), an integral tab (27, 27') of sheet metal is made by stamping to include the area (27a) for fastening to the frame, the hinge (27b), and the area (27c) for fastening to the layer of hard plastics material.

5. A method according to claims 3 and 4, **characterized in that** the tab is in the form of a plate that is bent at the location of the hinge (27b) and that is pierced by passages (37) in register with the cover (15).

6. A method according to any preceding claim,
**characterized in that**:
· during step d), a tab (27) is provided which presents a vibration damping area (47') between the hinge (27b) and the area (27a) for fastening the tab to the frame; and
· between steps e) and f), the tab is fastened to the reinforcing frame (21).

7. A method according to claim 6, **characterized in that** the vibration damping area is integrated in the tab (27'), which tab presents a redundant section (47') at said area.

8. A method according to any one of claims 1 to 5,
**characterized in that**:
· during step f), said vibration is absorbed in air, by postponing the step of fastening the tab (27) to the reinforcing frame (21) until after said step f); and
· during step g), subsequent to step f), said tab (27) is fastened to the reinforcing frame.

9. A method according to any preceding claim, **characterized in that** during step c), the layer of hard material (7) is covered with a covering comprising a layer of foam (9) lined with a skin (11) for appearance purposes.

10. A method according to claim 9, **characterized in that** during step c), the layer of hard material is thermally covered, the skin for appearance purposes constituting a layer of plastics material.

11. A method according to claim 7, **characterized in that** the redundant section (47') of the tab is situated outside the ejection channel (39) reserved for the air bag(s).
